Europäisches Patentamt

European Patent Office

Office européen des brevets

(11) Publication number: **0 043 225**
**B1**

## EUROPEAN PATENT SPECIFICATION

(45) Date of publication of patent specification: **16.01.85**

(51) Int. Cl.⁴: **F 16 L 13/10**

(21) Application number: **81302829.7**

(22) Date of filing: **23.06.81**

(54) **Mechanical pipe joint and method of forming same.**

(30) Priority: **05.06.81 US 267841**
**25.06.80 US 162722**

(43) Date of publication of application:
**06.01.82 Bulletin 82/01**

(45) Publication of the grant of the patent:
**16.01.85 Bulletin 85/03**

(84) Designated Contracting States:
**DE FR IT**

(56) References cited:
**CH-A- 439 888**
**DE-A-1 960 764**
**DE-B-1 032 623**
**DE-B-1 222 746**
**DE-C-1 053 260**
**GB-A-1 279 689**
**US-A-3 606 403**
**US-A-3 909 045**
**US-A-4 095 825**

(73) Proprietor: **Butler Taper Joint, Inc.**
**2012 Karbach**
**Houston Texas 77092 (US)**

(72) Inventor: **Butler, Major Gene**
**Rt. 3 Box 390**
**Huntsville Texas (US)**

(74) Representative: **Bluff, John William et al**
**c/o Lloyd Wise, Tregear & Co. Norman House**
**105-109 Strand**
**London, WC2R 0AE (GB)**

Courier Press, Leamington Spa, England.

# Description

This invention relates to a mechanical pipe joint and to a method of forming such joint.

In many applications, mechanical pipe joints have advantages over other conventional types of joints. They require no welder in the field and therefore a pipeline can be laid using this type joint with relatively inexpensive, unskilled workers. Also, no alignment clamps are required, as in the case of welded joints. Using this type of joint, instead of a threaded joint, eliminates the problem of thread protection, while moving the pipe to the field and stringing it along the right way. A mechanical joint can be made up much faster than a threaded or welded joint in most cases. Such a joint is particularly advantageous for use with internally coated pipe because forming the joint will not damage the coating and any gap between the coating on the two members is filled with the sealant used to seal the joint.

Mechanical joints are formed by forcing a pin section on the end of one pipe section into a socket formed on the end of another pipe section. The socket includes a cylindrical section, which usually has an inside diameter slightly less than the diameter of the pin to form an interference fit between the pin and cylindrical section of the socket when the joint is made. The interference fit provides structural strength to the joint.

The socket also includes a conical or tapered section between the cylindrical section and the pipe section. The socket is formed by inserting a mandrel of a pre-determined size into the pipe to swage or bell the end of the pipe outwardly to form both the cylindrical section and the tapered section.

The pin section of the joint requires only the forming of a tapered section on the end of the pipe section.

In U.S. Patent No. 4,095,825, entitled "Taper Pipe Joint", which issued on June 20, 1978, the tapered section of the socket and the tapered section of the pin were provided with diverging taper angles which resulted in an open-ended annular cavity being formed between the tapered sections when the pin was fully inserted into the socket, sealant was trapped in the annular cavity between the diverging tapers in the socket and pin, with which the pin was coated before insertion, when the joint was made up to form a seal in the cavity.

In some circumstances it may prove desirable to have a joint in which the sealant is so trapped as to be substantially inaccessible, for example, to corrosive fluids. To this end there is now proposed a mechanical pipe joint and a method of forming such a joint based on the concept that the tapered sections on the socket and the pin, respectively, have converging taper angles that form a substantially closed annular cavity in which sealant is trapped to provide a seal for the joint.

There will be described hereinafter how this invention can be put into practice to provide a mechanical pipe joint wherein the tapered sections on the socket and the pin converge to form a substantially closed annular cavity in which sealant can be trapped and compressed between the two tapers to seal the joint.

The practice of this invention to be described provides a mechanical pipe joint and method of forming the same wherein the annular body of sealant that seals the joint is protected from erosion by the fluids flowing through the joint.

It will be described hereinafter how this invention may be put into effect to provide a mechanical pipe joint in which the angle of taper on the pin is less than the angle of taper of the tapered section of the socket so that the end of the pin approaches or engages the tapered section of the socket the larger end of the taper on the pin will not have reached that of the taper on the socket to form an annular cavity for the sealant that is closed or has a very narrow opening and which increases in cross section from the end of the pin to the larger end of the taper of the socket to reduce to a minimum the sealant exposed to the erosive action of fluid flowing through the joint.

It will also be shown how this invention may be put into practice to provide a mechanical pipe joint that is particularly advantageous for use with pipe that is coated internally with a coating that will crack if subjected to unnecessary externally applied hoop stresses.

Stated generally, in one aspect of the invention there is provided a mechanical pipe joint for connecting two pipe sections, comprising a pin on the end of one section and a socket on the end of the other section into which the pin is inserted, said socket including a cylindrical section having an inside diameter less than the outside diameter of a cylindrical section of the pin to form an interference fit with the pin when the pin is inserted into the socket and an outwardly extending tapered section connecting the cylindrical section to the pipe section, said pin including a section tapering inwardly from the cylindrical section to the end thereof, characterised in that the inwardly tapering section of the pin has an angle of taper less than the angle of taper of the tapered section of the socket to form a substantially closed annular cavity between, on the one hand, the tapered section of the pin, and, on the other hand, at least a portion of the tapered section of the socket and a portion of the cylindrical section of the socket, in which cavity sealant may be trapped to seal the joint when the taper section of the pin is moved into position close to the tapered section of the socket.

In a second aspect of the invention there is provided a pipe for a pipeline, said pipe having a socket formed on one end and a pin formed on the other end, said socket comprising a cylindrical section having an inside diameter slightly less than the outside diameter of a cylindrical section of the pin and an outwardly extending tapered section connecting the cylindrical section to the pipe, and said pin comprising a section tapering inwardly from the cylindrical section to the end thereof, characterised in that the inwardly tapering section of the pin has a taper angle less than the taper angle of the tapered section of the socket, so that on insertion of a pin of one pipe into the socket of another pipe a substantially closed cavity is formed between the pin and socket in which cavity sealant may be trapped.

In another aspect of the invention provides a method of making a pin and socket type of mechanical pipe joint between a first and a second pipe comprising the steps of forming a socket in one end of the first pipe having a cylindrical section and a tapered section extending outwardly from the pipe to connect the cylindrical section to the pipe, forming a pin at one end of the second pipe having a cylindrical section and a section tapering inwardly from the cylindrical section to the end thereof, the taper angle of which is less than the taper angle of the tapered section of the socket, the formation of the pin and socket being such that the inside diameter of the cylindrical section of said socket is slightly smaller than the outside diameter of the cylindrical section of the pin, coating the tapered section of the pin with a sealant, and forcing the pin into the socket until the end of the tapered section of the pin is positioned close to the tapered section of the socket to form a substantially closed, annular cavity between, on the one hand, the tapered section of the pin, and on the other hand, at least a portion of the tapered section of the socket and a portion of the cylindrical section of the socket, in which cavity the sealant is trapped and a mechanical interference fit between the cylindrical sections of the socket and the pin.

In a preferred aspect of the invention the method comprises the step of sizing the outside diameter of the second pipe adjacent said one end to obtain the cylindrical section of the pin, having a predetermined interference fit with the cylindrical section of the socket in the end of the first pipe.

The invention and its preferred practice will now be more fully described with reference to the accompanying drawings, in which:

Figure 1 is a view, partly in section and partly in elevation, of a joint according to this invention;

Figure 2 is a sectional view on a larger scale through the upper half of the socket and pin sections of the joint of Figure 1 with the pin partly inserted into the socket;

Figure 3 is a sectional view of the joint of Figure 2 after the pin has been completely inserted in the socket;

Figure 4 is a sectional view on an enlarged scale of an alternative embodiment of a joint according to this invention;

Figure 5 is a cross-sectional view of a joint similar to that of Figure 4 for use with internally coated pipe, and

Figure 6 is a cross-sectional view of a mandrel used to size the outside diameter of the pin in a joint such as that of Figure 5, so as to ensure the proper interference fit and to also form the tapers on the end of the pipe.

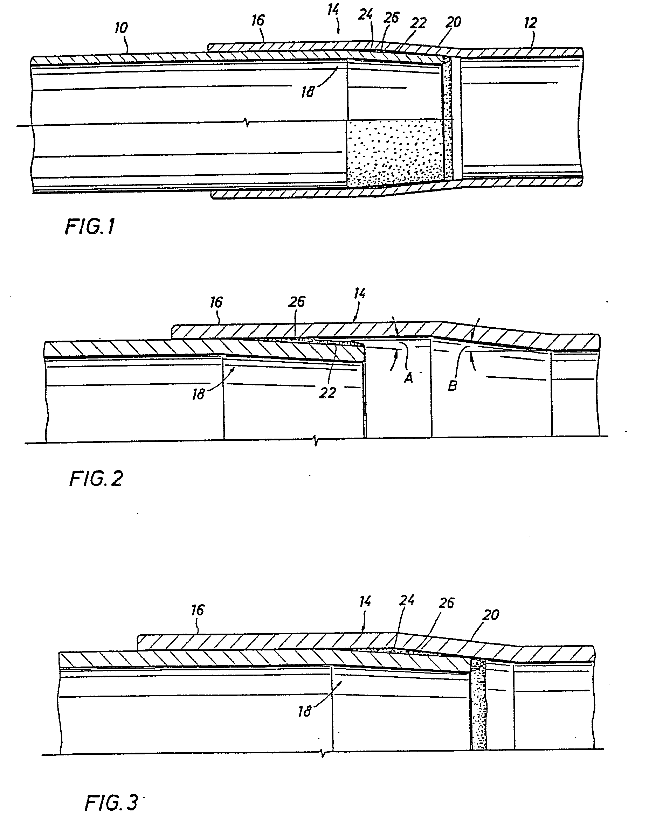

In Fig. 1, pipe section 10 is connected to pipe section 12. The pipe sections have the same nominal diameter and wall thickness. The end of pipe section 12 is preformed into socket 14. The socket includes cylindrical section 16, which has an inside diameter slightly less than the outside diameter of pipe 10, about thirty to forty thousands of an inch (.0762—.1016 cm), so that when pin section 18, formed on the end of pipe 10, is inserted into the socket there will be interference fit between the cylindrical outside surface of pin section 18 and the inside surface of cylindrical section 16 of the socket. Tapered section 20 connects cylindrical section 16 of the socket to the rest of pipe section 12. The interference fit between cylindrical section 16 and the outside of the pin section provides the mechanical strength of the joint, i.e., its ability to withstand tensile and bending forces.

Pin section 18 includes tapered section 22, which has an angle of taper (angle A in Fig. 2) less than the taper angle of tapered section 20 on the socket (angle B in Fig. 2).

To make the joint, the tapered section of the pin is coated with sealant 26. The pin is then forced into the socket as shown in Fig. 2 until the end of tapered section 22 on the pin is close to or engages the inside surface of tapered section 20 on the socket. Due to the different angles of taper of tapered section 22 on the pin and tapered section 20 of the socket, the two tapered surfaces have tapers that converge inwardly and the end of the pin will engage the tapered surface 20 if the socket of the pin is inserted sufficiently. In Fig. 3, the pin is shown in engagement with surface 20 of the socket forming closed annular cavity 24 between the tapered surface 22 on the pin and portions of the tapered surface 20 on the socket and the inner surface of cylindrical section 16 of the socket. The cavity formed in this manner is triangular in cross section, being very narrow or coming to a point at the end of the pin with its widest section located between tapered surface 22 on the pin and the apex of tapered surface 20 on the socket. This results in a minimum of exposure of the sealant to the erosive action of the fluid flowing through the joint, which is one of the important features of this invention.

The sealant is extruded longitudinally from between the tapered sections, as the pin moves into engagement with the tapered section on the socket. A generous supply of sealant 26 should be applied to the tapered section of the pin to make sure that cavity 24 is filled with sealant when the pin is fully inserted. Any excess sealant will flow over the end of the pin as shown in Figs. 1 and 3. This annular bead of sealant is exposed to the fluid flowing in the pipe, whereas, the sealant in cavity 24 is not and should remain in place indefinitely. The sealant trapped in annular cavity 24 provides a seal between the two surfaces and prevents fluid from leaking through the joints.

Anu substance that is soft enough to apply to the pin and which will fill the cavity and later harden can serve as a sealant. Preferably, a synthetic polymer is used that is semi-solid before application and which later becomes elastomeric.

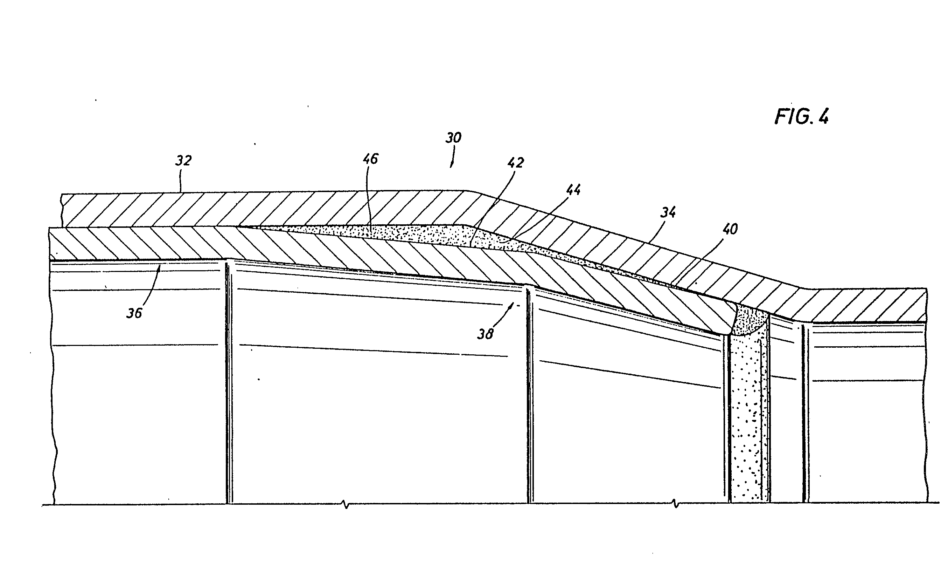

In the embodiment shown in Fig. 4, a slight change in the pin has been made. Socket 30, like socket 14 in the other embodiment, has cylindrical section 32 and tapered section 34. Pin 36 has tapered section 38, which has two portions of different taper angles. First portion 40 has a slightly greater taper angle than portion 42. With the double taper, when the pin has reached the position shown in Fig. 4, additional force may be applied urging the pin farther into the socket. This will cause a slight bending of the first tapered portion 40 relative to tapered portion 42 because of the additional movement of the pin into the socket. As a result, the volume of annular cavity 44 in which sealant 46 is trapped will decrease. This will result in a further compressing of the sealant in the annular cavity and will insure that the cavity is full of sealant.

This same thing happens with the single tapered pin of Figs. 1—3. The double taper just adds a second flexure joint.

This additional movement of the pin into the socket is very slight. Usually, the operator will place a mark on the pin a known distance from the end of the pin so he will know when the pin has been fully inserted and the pin has engaged the tapered section of the socket. He may want to stop there or he can apply more force to slightly decrease the volume of the annular cavity and obtain the advantage described above.

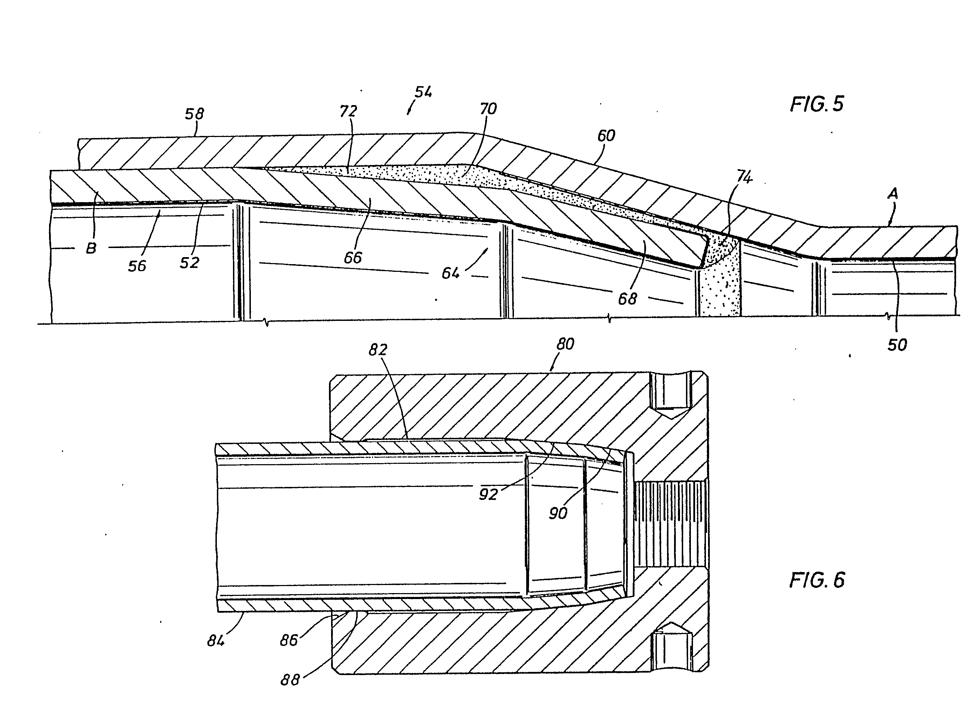

The joints shown in Figs. 1—4 and described above are made using uncoated pipe and, preferably, the end of the pin engages the tapered section of the socket although a completely satisfactory joint having all of the advantages of the substantially closed annular cavity for the sealant can be obtained even if the end of the pin joint comes close to engaging the tapered surface of the socket. This is what is done when joining internally coated pipe as shown in Fig. 5.

This joint is basically the same as the joint of Fig. 4 except that the inside surface of pipe sections A and B are coated with coatings 50 and 52, respectively. The ends of the pipe are preformed into socket 54 and pin 56 before the coating is applied. The socket includes cylindrical section 58 and tapered section 60, which preferably has a taper angle of about 6°. The pin includes cylindrical section 62 and inwardly tapered section 64 comprising sections 66 and 68 having slightly different taper angles. Tapered sections 66 and 68 preferably have taper angles of about 3° and 4° respectively. The pipe sections are then coated internally. Coating 50 on pipe section A extends into the socket far enough to cover most of the inner surface of tapered section 60. The coating on pipe section B extends over the inner surface of the pin including the tapered section, over the end of the pin, and back a short distance over the outer surface of the tapered section. Then when the joint is made up, as shown in Fig. 5, the narrow gap between the coated end of the pin and the coated surface on the tapered surface of the socket is filled with sealant 70 and the metal of the pipe sections is effectively protected from the corrosive fluids flowing through the joint.

Where the pipe is coated, the end of the pin cannot be moved into engagement with the tapered surface on the socket because it may cause the coating at that joint to crack and the cracks may extend beyond the protection of the sealant. Therefore, the pin is brought close to but spaced from the tapered surface of the socket to create annular cavity 72 that has a very narrow opening into the inside of the joint. This stand off should be about 1/32—1/16 of an inch (.08 cm—.16 cm). With such a narrow gap, the sealant can effectively close the cavity and protect the sealant from erosion by the fluids flowing through the joint. Annular bead 74 of sealant also helps insure that the sealant between the pin and the socket remains intact.

The interference fit between the cylindrical sections of the pin and socket will vary due to variations in the wall thickness of the pin. When joining coated pipe, particularly if the coating is hard and somewhat brittle, the hoop stress imposed on the pin due to the interference fit when the pipe is oversize will cause sufficient strain in the cylindrical section of the pipe to crack the coating.

To prevent this, the outside diameter of the pin is sized to closely control the interference fit between it and the socket. In Fig. 6, mandrel 80 is designed to form tapered section 64 on the pin and to size the outside diameter of the cylindrical section of the pin. The mandrel is cylindrically shaped. Central opening 82 is to form the end of pipe section 85 to the desired shape. The outer end of opening 82 had a lead-in taper 86 which guides the pipe entering the mandrel to cylindrical section 88. This diameter of section 88 is such that as the end of pipe 84 is forced into the mandrel to the position shown, the outside diameter will be reduced, if the pipe is oversize, to a preselected diameter that will not cause sufficient strain in the pipe when forced into a socket on another pipe to track the inner coating on the pipe.

Opening 82 has tapered wall sections 90 and 92 against its inner end which form double tapered section 64 on the pin. Between the tapered wall sections and pipe sizing section 88, the diameter of opening 82 is greater than the diameter of the pipe being formed.

## Claims

1. A mechanical pipe joint for connecting two pipe sections, comprising a pin (18, 36, 56) on the end of one section and a socket (14, 30, 54) on the end of the other section into which the pin is inserted, said socket including a cylindrical section having an inside diameter less than the outside diameter of a cylindrical section of the pin to form an interference fit with the pin when the pin is inserted into the socket and an outwardly extending tapered section (20, 34, 60) connecting the cylindrical section to the pipe section, said pin including a section (22, 38, 64) tapering inwardly from the cylindrical section to the end thereof, characterised in that the inwardly tapering section of the pin has an angle of taper less than the angle of taper of the tapered section of the socket to form a substantially closed annular cavity (24, 44, 72) between, on the one hand, the tapered section of the pin, and, on the other hand, at least a portion of the tapered section of the socket and a portion of the cylindrical section of the socket, in which cavity sealant (26, 46, 70) may be trapped to seal the joint when the tapered section of the pin is moved into position close to the tapered section of the socket.

2. The joint of Claim 1 in which the tapered section of the pin has first and second tapered portions of different taper angles with the first tapered portion having a greater taper angle than the second and with the taper angle of each portion being less than the taper angle of the tapered section of the socket.

3. The joint of Claim 2 in which said second tapered portion (42) of the pin is intermediate said first tapered portion (40) and said cylindrical section of the pin.

4. A pipe for a pipeline, said pipe having a socket (14, 30, 54) formed on one end and a pin (18, 36, 56) formed on the other end, said socket comprising a cylindrical section having an inside diameter slightly less than the outside diameter of a cylindrical section of the pin and an outwardly extending tapered section (20, 34, 60) connecting the cylindrical section to the pipe, and said pin comprising a section (22, 38, 64) tapering inwardly from the cylindrical section to the end thereof, characterised in that the inwardly tapering section (22, 44, 72) of the pin has a taper angle less than the taper angle of the tapered section of the socket, so that on insertion of a pin of one pipe into the socket of another pipe a substantially closed cavity (24, 44, 72) is formed between the pin and socket in which cavity sealant (26, 46, 70) may be trapped.

5. A method of making a pin and socket type of mechanical pipe joint between a first and a second pipe comprising the steps of forming a socket (14, 30, 54) in one end of the first pipe having a cylindrical section and a tapered section (20, 34, 60) extending outwardly from the pipe to connect the cylindrical section to the pipe, forming a pin (18, 36, 56) at one end of the second pipe having a cylindrical section and a section (22, 38, 64) tapering inwardly from the cylindrical section to the end thereof, the taper angle of which is less than the taper angle of the tapered section of the socket, the formation of the pin and socket being such that the inside diameter of the cylindrical section of said socket is slightly smaller than the outside diameter of the cylindrical section of the pin, coating the tapered section of the pin with a sealant, and forcing the pin into the socket until the end of the tapered section of the pin is positioned close to the tapered section of the socket to form a substantially closed, annular cavity (24, 44, 72) between, on the one hand, the tapered section of the pin, and, on the other hand, at least a portion of the tapered section of the socket and a portion of the cylindrical section of the socket, in which cavity the sealant is trapped and a mechanical interference fit between the cylindrical sections of the socket and the pin.

6. A method as claimed in Claim 5, comprising the step of sizing the outside diameter of the second pipe adjacent said one end to obtain the cylindrical section of the pin, having a predetermined interference fit with the cylindrical section of the socket in the end of the first pipe.

## Revendications

1. Raccord mécanique de conduite pour raccorder deux tronçons de conduite, comportant une partie mâle (18, 36, 56) à l'extrémité d'un tronçon et une partie femelle (14, 30, 54) à l'extrémité de l'autre tronçon dans laquelle on introduit la partie mâle, la dite partie femelle comprenant un tronçon cylindrique de diamètre interne inférieur au diamètre externe d'un tronçon cylindrique de la partie mâle pour former un ajustement serré avec la partie mâle lorsque l'on introduit la partie mâle dans la partie femelle et un tronçon conique (20, 34, 60), s'étendant vers l'extérieur, reliant le tronçon cylindrique à la conduite, la dite partie mâle comprenant un tronçon (22, 38, 64) allant en cône vers l'interieur depuis le tronçon cylindrique jusqu'à son extrémité, caractérisé en ce que le tronçon de la partie mâle qui va en cône vers l'intérieur présente un angle de cône inférieur à l'angle de cône du tronçon conique de la partie femelle pour former une cavité annulaire (24, 44, 72), essentiellement fermée, entre, d'une part, le tronçon conique de la partie mâle et, d'autre part, au moins une portion d'un tronçon conique de la partie femelle et une portion d'un tronçon cylindrique de la partie femelle, cavité dans laquelle on peut piéger du joint pâteux (26, 46, 70) pour réaliser l'étanchéité du raccord lorsque le tronçon conique de la partie mâle est mis en place près du tronçon conique de la partie femelle.

2. Le raccord de la revendication 1, dans lequel le tronçon conique de la partie mâle présente une première portion conique seconde portion conique de différents angles de cône, la première portion conique présentant un angle de cône supérieur à la seconde et l'angle de cône de chaque portion étant inférieur à l'angle de cône de la portion conique de la partie femelle.

3. Le joint de la revendication 2 dans lequel la dite seconde portion conique (42) de la partie mâle est intermédiaire entre la dite première portion conique (40) et le dit tronçon cylindrique de la partie mâle.

4. Conduite pour pipeline, la dite conduite présentant une partie femelle (14, 30, 54) venue de forme à une extrémité et une partie mâle (18, 36, 56) venue de forme à l'autre extrémité, la dite partie femelle comportant un tronçon cylindrique présentant un diamètre interne légèrement inférieur au diamètre externe du tronçon cylindrique de la partie mâle et un tronçon conique (20, 34, 60), s'étendant vers l'intérieur, reliant le tronçon cylindrique à la conduite et la dite partie mâle comprenant un tronçon (22, 38, 64), qui va en cône vers l'intérieur depuis le tronçon cylindrique jusqu'à son extrémité, caractérisée en ce que le tronçon (22, 44, 72) de la partie mâle qui va en cône vers l'intérieur présente un angle de cône inférieur à l'angle de cône de la section conique de la partie femelle, de sorte que lors de l'introduction d'une partie mâle d'une conduite dans la partie femelle d'une autre conduite il se forme une cavité (24, 44, 72) essentiellement fermée entre la partie mâle et la partie femelle, cavité dans laquelle on peut piéger du joint pâteux (26, 46, 70).

5. Procédé de fabrication d'un joint mécanique de conduite du type partie mâle et partie femelle entre une première conduite et une seconde conduite comportant les phases consistant à former une partie femelle (14, 30, 54) à une extrémité de la première conduite présentant un tronçon cylindrique et un tronçon conique (20, 34, 60), s'étendant vers l'extérieur à partir de la conduite pour relier le tronçon cylindrique à la conduite, consistant aussi à former une partie mâle (18, 36, 56) à une extrémité de la seconde conduite présentant un tronçon cylindrique et un tronçon (22, 38, 64) allant en cône vers l'intérieur depuis le tronçon cylindrique jusqu'à son extrémité, l'angle de cône de ce tronçon étant inférieur à l'angle de cône du tronçon conique de la partie femelle, la formation de la partie mâle et de la partie femelle étant telle que le diamètre interne du tronçon cylindrique de la dite partie femelle est légèrement inférieur au diamètre externe du tronçon cylindrique de la partie mâle, consistant aussi à revêtir le tronçon conique de la partie mâle d'un joint pâteux et à entrer de force la partie mâle dans la partie femelle jusqu'à ce que l'extrémité du tronçon conique de la partie mâle se place près du tronçon conique de la partie femelle pour former une cavité annulaire (24, 44, 72) essentiellement fermée entre, d'une part, le tronçon conique de la partie mâle et, d'autre part, au moins une portion du tronçon conique de la partie femelle et une portion du tronçon cylindrique de la partie femelle, cavité dans laquelle le joint pâteux est piégé, et pour former un ajustement mécanique serré entre les tronçons cylindriques de la partie femelle et de la partie mâle.

6. Procédé comme revendiqué dans la revendication 5, comportant la phase de mettre à la cote le diamètre externe de la seconde conduite près de la dite extrémité pour obtenir le tronçon cylindrique de la partie mâle présentant un joint serré prédéterminé avec le tronçon cylindrique de la partie femelle à l'extrémité de la première conduite.

**Patentansprüche**

1. Mechanischer Rohrverbinder zur Verbindung zweier Rohrabschnitte mit einem Zapfen (18, 36, 56) am Ende eines Abschnittes und einer Muffe (14, 30, 54) am Ende des anderen Abschnittes, in welches der Zapfen eingeführt wird, wobei die Muffe einen zylindrischen Abschnitt mit einem Innendurchmesser, welcher geringer ist als der Außendurchmesser eines zylindrischen Abschnittes des Zapfens zur Ausbildung eines Paßsitzes nach Einführen des Zapfens in die Muffe, und einen sich nach außen erstreckenden verjüngten Abschnitt, welcher den zylindrischen Abschnitt mit dem Rohrabschnitt verbindet, aufweist und wobei der Zapfen eine sich nach innen von dem zylindrischen Abschnitt zu dessen Ende hin verjüngenden Abschnitt (22, 38, 64) aufweist, dadurch gekennzeichnet, daß der nach innen verjüngte Abschnitt des Zapfens einen geringeren Verjüngungswinkel aufweist als der verjüngte Abschnitt der Muffe, um einen im wesentlichen abgeschlossenen ringförmigen Hohlraum (24, 44, 72) zwischen einerseits dem verjüngten Abschnitt des Zapfens und andererseits zumindest einem Teil des verjüngten Abschnittes der Muffe und einem Teil des zylindrischen Abschnittes der Muffe auszubilden, in welchem Hohlraum ein Dichtmittel (26, 46, 70) zur Abdichtung der Verbindung nach Bewegung des verjüngten Abschnittes des Zapfens in eine dem verjüngten Abschnitt der Muffe nah benachbarte Lage einschließbar ist.

2. Rohrverbinder gemäß Anspruch 1, bei welchem der verjüngte Abschnitt des Zapfens einen ersten und einen zweiten verjüngten Teil mit unterschiedlichen Verjüngungswinkeln aufweist, wobei der erste verjüngte Teil einen größeren Verjüngungswinkel aufweist als der zweite und der Verjüngungswinkel beider Teile kleiner ist als der Verjüngungswinkel des verjüngten Abschnittes der Muffe.

3. Rohrverbinder gemäß Anspruch 2, bei welchem der zweite verjüngte Teil (42) des Zapfens zwischen dem ersten verjüngten Teil (40) und dem zylindrischen Abschnitt des Zapfens angeordnet ist.

4. Rohr für eine Pipeline, welches eine an einem Ende ausgebildete Muffe (14, 30, 54) und einen am anderen Ende ausgebildeten Zapfen (15, 36, 56) aufweist, wobei die Muffe einen zylindrischen Abschnitt mit einem Innendurchmesser, welcher geringer ist als der Außendurchmesser eines zylindrischen Abschnittes des Zapfens, und einen sich nach außen erstreckenden verjüngten Abschnitt (20, 34, 60), welcher den zylindrischen Abschnitt mit dem Rohr verbindet, aufweist und wobei der Zapfen einen sich nach innen von dem zylindrischen Abschnitt zu dessen Ende hin verjüngenden Abschnitt (22, 38, 64) aufweist, dadurch gekennzeichnet, daß der sich nach innen verjüngende Abschnitt (22, 44, 72) des Zapfens einen kleineren Verjüngswinkel aufweist als der verjüngte Abschnitt der Muffe, so daß bei Einführen eines Rohres in die Muffe eines anderen Rohres ein im wesentlichen geschlossener Hohlraum (24, 44, 72) zwischen Zapfen und Muffe ausgebildet wird, in welchem Hohlraum ein Dichtungsmittel (26, 46, 70) einschließbar ist.

5. Verfahren zur Ausbildung einer Zapfen-Muffe-artigen mechanischen Rohrverbindung zwischen einem ersten und einem zweiten Rohr mit folgenden Schritten: Ausbildung einer Muffe (14, 30, 54) an einem Ende des ersten Rohres mit einem zylindrischen Abschnitt und einem sich nach außen von dem Rohr aus erstreckenden verjüngten Abschnitt (20, 34, 60) zur Verbindung des zylindrischen Abschnittes mit dem Rohr, Ausbildung eines Zapfens (15, 36, 56) an einem Ende des zweiten Rohres mit einem zylindrischen Abschnitt und einem sich nach innen von dem zylindrischen Abschnitt zu dessen Ende hin verjüngenden Abschnitt (22, 38, 64), dessen Verjüngungswinkel kleiner ist als der Verjüngungswinkel des verjüngten Abschnittes der Muffe, wobei die Ausbildung von Zapfen und Muffe derart vorgenommen wird, daß der Innendurchmesser des zylindrischen Abschnittes der Muffe geringfügig kleiner ist als der Außendurchmesser des zylindrischen Abschnittes des Zapfens, Beschichtung des verjüngten Abschnittes des Zapfens mit einem Dichtungsmittel, Einpressen des Zapfens in die Muffe, bis das Ende des verjüngten Abschnittes des Zapfens sich in einer nah benachbarten Lage zu dem verjüngten Abschnitt der Muffe befindet, um einen im wesentlichen abgeschlossenen, ringförmigen Hohlraum (24, 44, 72) zwischen einerseits dem verjüngten Abschnitt des Zapfens und andererseits zumindest einem Teil des verjüngten Abschnittes des Muffe und einem Teil des zylindrischen Abschnittes der Muffe auszubilden, in welchem Hohlraum das Dichtmittel eingeschlossen ist, und Ausbildung eines Preßsitzes zwischen den zylindrischen Abschnitten von Muffe und Zapfen.

6. Verfahren gemäß Anspruch 5, bei welchem der Außendurchmesser des zweiten Rohres an einem Ende beeinflußt wird, um einen vorbestimmten Preßsitz des zylindrischen Abschnittes des Zapfens mit dem zylindrischen Abschnitt der Muffe im Ende des ersten Rohres zu erhalten.

**0 043 225**

FIG.1

FIG.2

FIG.3

1

FIG. 4

0 043 225

FIG. 5

58   72   54   70   60   74   A

B   56   52   66   64   68   50

FIG. 6

82   80

92   90

84   86   88

0 043 225

3